# EUROPEAN PATENT SPECIFICATION

(11) **EP 3 889 946 B1**
(45) Date of publication and mention of the grant of the patent: **10.12.2025**
(21) Application number: 19891196.8
(22) Date of filing: 20.09.2019
(51) Int. Cl.: G06T 7/70, G06V 20/58, G08G 1/16

(54) **EXTERNAL ENVIRONMENT RECOGNITION DEVICE**
VORRICHTUNG ZUR ERKENNUNG EINER EXTERNEN UMGEBUNG
DISPOSITIF DE RECONNAISSANCE D'ENVIRONNEMENT EXTÉRIEUR

(30) Priority: 29.11.2018 JP 2018223474
(43) Date of publication of application: 06.10.2021
(73) Proprietor: Astemo, Ltd., Tokyo 100-0004 (JP)
(72) Inventor: GOMEZCABALLERO Felipe, Tokyo 100-8280 (JP); KOBAYASHI Masayuki, Tokyo 100-8280 (JP); SHIMA Takeshi, Hitachinaka-shi, Ibaraki 312-8503 (JP); TAKEMURA Masayuki, Tokyo 100-8280 (JP)
(74) Representative: MERH-IP Matias Erny Reichl Hoffmann Patentanwälte PartG mbB
(86) International application number: PCT/JP2019/036914
(87) International publication number: WO 2020/110435

(56) References cited:
- EP-A1- 3 179 445
- WO-A1-2017/122552
- JP-A- 2010 205 039
- JP-A- 2011 030 140
- JP-A- H0 778 258
- JP-A- H09 179 989
- MIGUEL OLIVEIRA ET AL: "Multimodal inverse perspective mapping", INFORMATION FUSION, vol. 24, 1 July 2015 (2015-07-01), US, pages 108 - 121, XP055642214, ISSN: 1566-2535, DOI: 10.1016/j.inffus.2014.09.003
- DAMON PIERRE-MARIE ET AL: "Inverse Perspective Mapping Roll Angle Estimation for Motorcycles", 2018 15TH INTERNATIONAL CONFERENCE ON CONTROL, AUTOMATION, ROBOTICS AND VISION (ICARCV), IEEE, 18 November 2018 (2018-11-18), pages 349 - 354, XP033480746, DOI: 10.1109/ICARCV.2018.8581182

## Description

### Technical Field

The present invention relates to an external environment recognition device, and particularly to an onboard external environment recognition device for detecting an obstacle from an image of an environment around a user's vehicle.

### Background Art

An object detection apparatus has recently been used, which detects a nearby moving or stationary object (an obstacle) from an image.

The image-based object detection apparatus is usable in a surveillance system for detection of break-in or abnormality or an onboard system for safe driving support.

An onboard object detection apparatus is configured to detect a moving or stationary object (an obstacle) around a user's vehicle, to inform a user (a driver) of a possibility that the user's vehicle collides with the obstacle, and to automatically stop the user's vehicle so as to avoid the collision with the obstacle, based on a determination system.

For example, PTL 1 discloses an apparatus configured to change a video shooting range, position, and orientation of an onboard camera in accordance with a road shape and a distance from a vehicle to a nearby obstacle, thereby providing a driver with the most necessary video for safely driving down a narrow or curved road.

PTL 2 discloses an apparatus configured to detect a moving object from a bird's-eye view image generated from an image acquired by an onboard camera, thereby detecting a distance from a vehicle to the detected object, without addition of an external range sensor. Furthermore, PTL 3 discloses an image processing apparatus for detecting a position / directional shift of a camera during traveling, wherein a correction processing unit is provided that performs a correction process of the angle of view of the camera.

### Citation List

### Patent Literature

PTL 1: JP 2012-71833 A
PTL 2: JP 2016-134764 A
PTL 3: WO 2017/122552 A1

### Summary of Invention

### Technical Problem

However, the apparatus disclosed in PTL 1 merely changes the orientation and pose of a camera that provides a driver with a video, based on a road shape acquired from a map, without taking a current environmental situation when a vehicle is running into consideration. In a case where the video is used for object detection in relation to a user's vehicle, it is difficult to accurately identify the position of a detected object without an external range sensor. This may result in a complicated system configuration and an increase in cost.

WO 2017/122552 A1 discloses detecting a position and direction misalignement of a camera of a vehicle and performing dynamic calibration of the camera.

MIGUEL OLIVEIRA ET AL: "Multimodal inverse perspective mapping",INFORMATION FUSION, vol. 24, 1 July 2015 (2015-07-01), pages 108-121, discloses an image-based approach to estimate a motorcycle roll angle to the road plane by means of a basic monocular camera.

EP 3 179 445 A1 discloses an external environment recognizing device for a vehicle that accurately detects a position of a moving object with high accuracy only with an image captured by a camera without adding a measurement sensor.

On the other hand, the apparatus disclosed in PTL 2 is capable of detecting a moving object and calculating a distance from a vehicle to the detected object, without an external range sensor. However, the apparatus disclosed in PTL 2 is configured to operate with a small change in relationship between a current road situation and an onboard camera during a processing cycle. The apparatus disclosed in PTL 2 is therefore capable of calculating a distance from a vehicle to a detected object, based on geometric image transformation (e.g., bird's-eye view image transformation), without taking the relationship into consideration. Consequently, in a case where the relevant system is used on condition that a vehicle speed and a current road situation affect a relationship between the onboard camera and the current road situation, to generate a change in initially set camera pose parameter, the system possibly calculates a distance from the vehicle to the detected object with low accuracy, generates a result of erroneous object detection, and lowers its reliability.

The present invention has been made in view of the circumstances described above. An object of the present invention is to provide an external environment recognition device capable of calculating camera pose parameters and adjusting geometric image transformation parameters, thereby adjusting a relationship between a current environment and one or more camera devices, capable of reducing an erroneous detection ratio and maintaining object detection accuracy, thereby increasing object detection reliability, and capable of calculating a distance to a detected object with high accuracy without addition of an external range sensor.

### Solution to Problem

In order to attain the object, an external environment recognition device according to the present invention as set out in the appended set of claims. Preferred embodiments of the present invention are described in the dependent claims.

### Advantageous Effects of Invention

With this configuration, the external environment recognition device according to the present invention updates geometric image transformation parameters, based on camera pose parameters calculated for a current environment by the camera pose parameter calculation unit, thereby reducing variations in the camera pose parameters for use in image transformation. The external environment recognition device according to the present invention is thus capable of improving target object detection accuracy and position identification accuracy. The external environment recognition device according to the present invention is therefore capable of reducing an erroneous detection ratio as to a detected object and accurately calculating a distance from a vehicle to the detected object even in a change in environmental condition when the vehicle is running.

According to the present invention, it is hence possible to calculate camera pose parameters and adjust geometric image transformation parameters, thereby adjusting a relationship between a current environment and one or more camera devices, even in a change in environmental condition when a vehicle is running. It is also possible to reduce an erroneous detection ratio and improve object detection accuracy, thereby increasing object detection reliability. It is also possible to calculate a distance from a vehicle to a detected object with high accuracy. It is thus possible to improve the safety of driving.

Other features, configurations, and advantageous effects will become obvious from the following description of embodiments.

### Brief Description of Drawings

[FIG. 1] FIG. 1 is a block diagram that illustrates a schematic configuration of an external environment recognition device according to a first embodiment of the present invention.
[FIG. 2] FIG. 2 is a top view that illustrates a schematic configuration of a sensing unit.
[FIG. 3] FIG. 3(a) is an explanatory view of a camera pose parameter of a pitch angle on a three-dimensional space, FIG. 3(b) is an explanatory view of a camera pose parameter of a yaw angle on the three-dimensional space, FIG. 3(c) is an explanatory view of a camera pose parameter of a roll angle on the three-dimensional space, and FIG. 3(d) is an explanatory view of a relationship among the camera pose parameters.
[FIG. 4] FIG. 4 is an explanatory view of the details of processing executed by a road surface shape information acquisition unit.
[FIG. 5] FIG. 5(a) is an explanatory view of a change in camera pose occurring at the external environment recognition device installed in a vehicle that is normally running, FIG. 5(b) is an explanatory view of a change in camera pose occurring at the external environment recognition device installed in the vehicle during braking, and FIG. 5(c) is an explanatory view of a change in camera pose occurring at the external environment recognition device installed in the vehicle that is being accelerated.
[FIG. 6] FIG. 6 is a flowchart that illustrates a relationship among and processes by units in the external environment recognition device according to the first embodiment, in adjusting image transformation parameters and performing geometric image transformation.
[FIG. 7] FIG. 7 is a block diagram that illustrates a schematic configuration of an external environment recognition device according to a second embodiment of the present invention.
[FIG. 8] FIG. 8 is a flowchart that illustrates a relationship among and processes by units in the external environment recognition device according to the second embodiment, in adjusting image transformation parameters and performing geometric image transformation.

### Description of Embodiments

Hereinafter, a description will be given of an external environment recognition device according to a preferred embodiment of the present invention with reference to the drawings. In the following description, processes are executed using a processor and a memory; however, a hardware circuit may execute some of or all the processes which the processor executes.

### [First Embodiment]

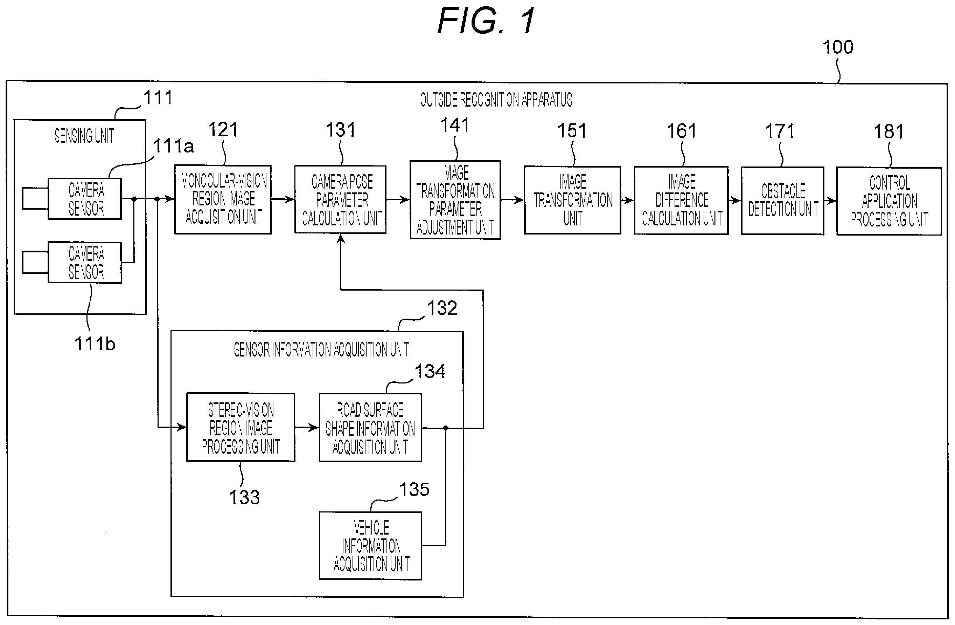

With reference to FIGS. 1 to 6, first, a description will be given of a configuration and an operation of an external environment recognition device 100 according to a first embodiment. Although not illustrated in the drawings, the external environment recognition device 100 has a configuration in which a CPU, a RAM, a ROM, and the like are interconnected via a bus, and controls the entire system operation in such a manner that the CPU executes various control programs stored in the ROM.

FIG. 1 is a block diagram that illustrates a schematic configuration of the external environment recognition device 100 according to the first embodiment.

The external environment recognition device 100 according to the first embodiment is installed in, for example, a vehicle (a user's vehicle) V. As illustrated in FIG. 1, the external environment recognition device 100 includes a sensing unit 111, a monocular-vision region image acquisition unit (hereinafter, simply referred to as an image acquisition unit) 121, a camera pose parameter calculation unit 131, a sensor information acquisition unit 132, an image transformation parameter adjustment unit 141, an image transformation unit 151, an image difference calculation unit 161, an obstacle detection unit 171, and a control application processing unit 181.

In the first embodiment, the sensing unit 111 includes two camera sensors 111a and 111b located at the same level. The two camera sensors 111a and 111b are provided in pairs to serve as a single onboard stereo camera.

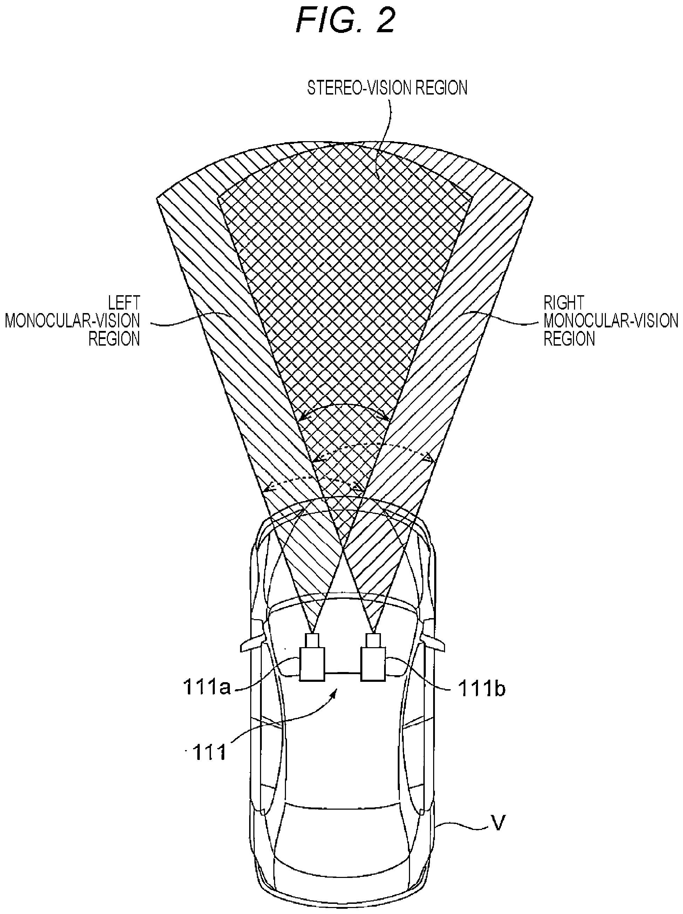

In the first embodiment, more specifically, each of the camera sensors 111a and 111b of the sensing unit 111 includes a CCD and a CMOS image sensor. As illustrated in, for example, FIG. 2, the camera sensors 111a and 111b are mounted to a windshield, a rearview mirror, or the like in the interior of the user's vehicle V. In addition, the camera sensors 111a and 111b are juxtaposed left and right at the same height and are directed forward. The camera sensors 111a and 111b are placed to capture an image of a region (the outside) forward of the user's vehicle V at a predetermined angle of depression (i.e., an image capturing region) such that the angles of depression partially overlap each other. It is assumed herein that the camera sensor 111a is defined as a left camera sensor, and the camera sensor 111b is defined as a right camera sensor, for example. In this case, the right area of the angle of depression of the camera sensor 111a and the left area of the angle of depression of the camera sensor 111b overlap each other. In the first embodiment, with this configuration, a region in front of the user's vehicle V corresponds to a stereo-vision region defined by the image capturing region of the camera sensor 111a and the image capturing region of the camera sensor 111b, a region in front of and to the left of the user's vehicle V corresponds to a left monocular-vision region defined by the left side of the image capturing region of the camera sensor 111a, and a region in front of and to the right of the user's vehicle V corresponds to a right monocular-vision region defined by the right side of the image capturing region of the camera sensor 111b.

The sensing unit 111 transmits the images captured by the camera sensors 111a and 111b to the image acquisition unit 121 and a stereo-vision region image processing unit 133 of the sensor information acquisition unit 132.

It should be noted that each of the camera sensors 111a and 111b of the sensing unit 111 is not limited to the camera configured to capture an image of a region forward of the user's vehicle V. Each of the camera sensors 111a and 111b may alternatively be, for example, a camera configured to capture an image of a region to the left or right of the user's vehicle V or a camera configured to capture an image of a region rearward of the user's vehicle V.

In the first embodiment, the sensing unit 111 includes the two camera sensors 111a and 111b provided in pairs to serve as a single onboard stereo camera in order that the sensor information acquisition unit 132 (specifically, a road surface shape information acquisition unit 134) acquires road surface shape information, using stereo vision as will be described later. However, the configuration of the sensing unit 111 is not limited thereto. For example, the sensing unit 111 may include a single monocular camera sensor (the camera sensor 111a or the camera sensor 111b) in a case of acquiring road surface shape information, using monocular vision, in a case of acquiring road surface shape information, using an image acquired by a camera sensor different from the camera sensor of the sensing unit 111, and in a case of acquiring road surface shape information, using sensor information acquired by a sensor (e.g., a laser radar, a millimeter-wave radar, an ultrasonic sensor) different from the camera sensor.

The image acquisition unit 121 subjects an image or images acquired by one of or both the camera sensors 111a and 111b of the sensing unit 111 to processing to adjust the image characteristics for further processing. Examples of this processing may include, but not limited to, image resolution adjustment that involves reducing or enlarging an input image to change the size of the image, and image interest region selection that involves cutting (trimming) a given region from an input image for further processing. In the first embodiment, the image acquisition unit 121 acquires a part of or the whole of a monocular-vision region image or monocular-vision region images captured by one of or both the camera sensors 111a and 111b of the sensing unit 111. In the example illustrated in FIG. 2, the image acquisition unit 121 acquires a part of or the whole of one of or both a left monocular-vision region image captured by the camera sensor 111a and a right monocular-vision region image captured by the camera sensor 111b. It should be noted that parameters for use in the image resolution adjustment and the image interest region selection may be controlled based on a current driving environment (e.g., a vehicle speed, a cornering speed).

The image acquisition unit 121 transmits the acquired images to the camera pose parameter calculation unit 131.

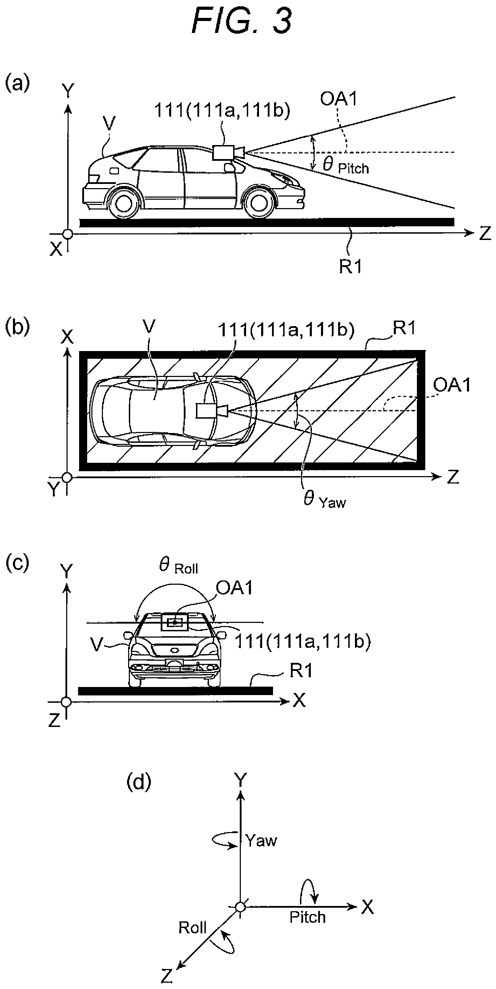

The camera pose parameter calculation unit 131 has a function of calculating one of or all camera pose parameters relative to a predetermined reference (a flat ground R1 in the first embodiment), using information acquired by the sensor information acquisition unit 132 as will be described in detail later. With reference to FIGS. 3a to 3d, the camera pose parameters are defined by a camera pitch angle (a horizontal turn), a camera roll angle (a longitudinal turn), and a camera yaw angle (a vertical turn). Specifically, the camera pose parameter calculation unit 131 calculates one of or all the camera pose parameters for correcting a misalignment of a sensor optical axis OA1 of the sensing unit 111 (specifically, the camera sensors 111a and 111b) relative to the predetermined reference (the flat ground R1 in the first embodiment). In other words, the camera pose parameter calculation unit 131 calculates one of or all the camera pose parameters for correcting a displacement of a current pose of the sensing unit 111 (specifically, the camera sensors 111a and 111b). The parameter calculation processing to be executed by the camera pose parameter calculation unit 131 differs depending on information acquired by the sensor information acquisition unit 132. For example, it is assumed that the external environment recognition device 100 is configured to execute processing of calculating an inclination of a road (a road surface) forward of the user's vehicle V, based on distance data acquired by stereo matching. In a case where information is collectable from the external environment recognition device 100, the resultant inclination of the road (the road surface) is used for calculating the pitch angle and roll angle of the external environment recognition device 100 relative to the road (the road surface) forward of the user's vehicle V. According to another example, in a case where a pitch angle, a yaw angle, and a roll angle are directly obtained from external sensors, the camera pose parameters are adjustable based on offsets from initial parameters. The external environment recognition device 100 may adopt another method of calculating the camera pose parameters.

The camera pose parameter calculation unit 131 also calculates camera pose parameters, including a translation parameter and a turn parameter, that define a movement of the camera sensors 111a and 111b in a predetermined time with the running of the user's vehicle V (see a vehicle information acquisition unit 135 of the sensor information acquisition unit 132).

The camera pose parameter calculation unit 131 transmits the calculated camera pose parameters to the image transformation parameter adjustment unit 141.

The sensor information acquisition unit 132 has a function of collecting information to be used by the camera pose parameter calculation unit 131 calculating camera pose parameters. In the first embodiment, the sensor information acquisition unit 132 includes the stereo-vision region image processing unit 133, the road surface shape information acquisition unit 134, and the vehicle information acquisition unit 135.

The stereo-vision region image processing unit 133 subjects images acquired by both the camera sensors 111a and 111b of the sensing unit 111 to processing to adjust the image characteristics for further processing. Examples of this processing may include, but not limited to, image resolution adjustment that involves reducing or enlarging an input image to change the size of the image, image interest region selection that involves cutting (trimming) a given region from an input image for further processing, and image synchronization that involves synchronizing an input image. In the first embodiment, the stereo-vision region image processing unit 133 acquires a stereo-vision region image formed by both the camera sensors 111a and 111b of the sensing unit 111, in a synchronized state. It should be noted that parameters for use in the image resolution adjustment and the image interest region selection may be controlled based on a current driving environment (e.g., a vehicle speed, a cornering speed).

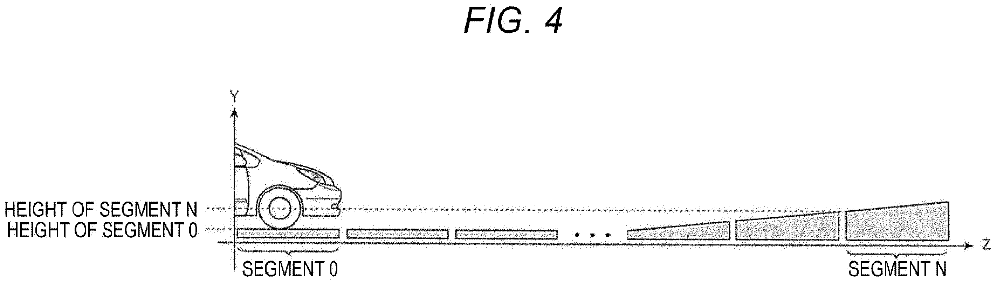

The road surface shape information acquisition unit 134 has a function of acquiring road surface shape information on the outside (i.e., a region around the user's vehicle V), using an image (also referred to as a stereo-vision region image) subjected to the processing in the stereo-vision region image processing unit 133. The road surface shape information acquisition unit 134 subjects the image subjected to the processing in the stereo-vision region image processing unit 133 to three-dimensional processing (e.g., stereo matching) to calculate and acquire road surface shape information on a road surface in the image. As illustrated in, for example, FIG. 4, the road surface shape information acquisition unit 134 acquires the road surface shape information by dividing the image into a plurality of segments in accordance with a distance from the user's vehicle V (e.g., a distance in the longitudinal direction (the traveling direction), a distance in the lateral direction) and calculating a height of each segment from a predetermined position.

For example, the road surface shape information acquisition unit 134 may also acquire road surface shape information in a region different from the stereo-vision region where the image capturing regions of the camera sensors 111a and 111b currently overlap each other, in such a manner that the road surface shape information acquisition unit 134 stores road surface shape information acquired once in a storage unit such as a RAM.

On the other hand, the vehicle information acquisition unit 135 acquires information on the height, position, pitch angle, yaw angle, and roll angle of the user's vehicle V from one or more sensors (not illustrated). Examples of such a sensor may include, but not limited to, a vehicle suspension system, an in-vehicle sensor (a sensor that detects a vehicle speed, a cornering speed, a yaw rate, or the like), and an inertia measurement sensor.

In this way, the sensor information acquisition unit 132 is capable of detecting and acquiring information on the current height, pitch angle, yaw angle, and roll angle (i.e., the current pose) of the sensing unit 111 (specifically, the camera sensors 111a and 111b) of the external environment recognition device 100 installed in the user's vehicle V. The sensor information acquisition unit 132 transmits the sensor information to the camera pose parameter calculation unit 131.

As described above, the camera pose parameter calculation unit 131 calculates the pitch angle and roll angle of the external environment recognition device 100 relative to the road surface, using the road surface shape (the inclination) received from the road surface shape information acquisition unit 134. In addition, the camera pose parameter calculation unit 131 calculates the offsets from the initial parameters, using the pitch angle, yaw angle, and roll angle received from the vehicle information acquisition unit 135. The camera pose parameter calculation unit 131 thus calculates the camera pose parameters for correcting the misalignment of the sensor optical axis OA1 of the sensing unit 111 (specifically, the camera sensors 111a and 111b) relative to the predetermined reference (the flat ground R1 in the first embodiment), that is, the displacement of the current pose of the sensing unit 111 (specifically, the camera sensors 111a and 111b).

It should be noted that the configuration of the sensor information acquisition unit 132 is not limited thereto as described above. For example, the sensor information acquisition unit 132 does not necessarily include the stereo-vision region image processing unit 133 or may include only one of the road surface shape information acquisition unit 134 and the vehicle information acquisition unit 135 in a case of acquiring road surface shape information, using monocular vision (i.e., using one of the camera sensors 111a and 111b), in a case of acquiring road surface shape information, using an image acquired by a camera sensor different from the camera sensors of the sensing unit 111, and in a case of acquiring road surface shape information, using sensor information acquired by a sensor (e.g., a laser radar, a millimeter-wave radar, an ultrasonic sensor) different from the camera sensors.

The image transformation parameter adjustment unit 141 has a function of defining the orientation of the camera sensors 111a and 111b of the sensing unit 111 relative to the ground R1, and updating image transformation parameters which are preset camera external parameters for use in desired geometric image transformation (bird's-eye view image transformation in the first embodiment). These parameters are adjusted based on the camera pose parameters calculated by the camera pose parameter calculation unit 131. In a case of taking the temporary (temporal) nature of data acquired by the sensing unit 111 into consideration if necessary, the image transformation parameter adjustment unit 141 may calculate the movement of the user's vehicle V during the processing period in consideration of the vehicle speed and cornering speed acquired from the vehicle information acquisition unit 135 of the sensor information acquisition unit 132, and may use the calculated movement in order to adjust the position of the sensing unit 111 in a three-dimensional space in accordance with the calculated movement.

The image transformation parameter adjustment unit 141 transmits the updated (adjusted) image transformation parameters to the image transformation unit 151.

The image transformation unit 151 has a function of performing geometric image transformation (bird's-eye view image transformation in the first embodiment) on the image (the monocular-vision region image) acquired and processed by the image acquisition unit 121, based on the image transformation parameters calculated by the image transformation parameter adjustment unit 141. Examples of the image transformation by the image transformation unit 151 may include, but not limited to, affine transformation, such as rotation, reduction, shearing, and top view image transformation, with respect to the flat ground R1.

The image transformation unit 151 transmits the transformed image to the image difference calculation unit 161.

The image difference calculation unit 161 has a function of calculating a difference image indicating a difference between at least two images (images different in time from each other) transformed by the image transformation unit 151. Examples of the difference calculation by the image difference calculation unit 161 may include, but not limited to, simple pixel difference calculation and image difference calculation using a filter.

The image difference calculation unit 161 transmits the calculated difference image to the obstacle detection unit 171.

The obstacle detection unit 171 has a function of detecting a three-dimensional object (an obstacle) in the images acquired by the image acquisition unit 121, using the images and the difference image calculated by the image difference calculation unit 161, and calculating the position of the three-dimensional object.

The obstacle detection unit 171 transmits the detected information to the control application processing unit 181.

The term "obstacle detection" used herein refers to at least processing of executing tasks such as target object detection (detection of the position of a target object on a three-dimensional space), target object speed calculation, and vehicle speed calculation. This processing may also involve target object classification (e.g., an automobile/a vehicle, a motorcycle, a bicycle, a pedestrian, a pole).

The control application processing unit 181 has a function of determining a control application to be executed on the user's vehicle V in which the external environment recognition device 100 is mounted, in accordance with the obstacle recognized by the obstacle detection unit 171. This control application includes various applications for controlling the running state of the user's vehicle V. Examples of the control application may include, but not limited to, an application for automatically controlling steering, acceleration, braking, and the like of the user's vehicle V.

It should be noted that the parameter adjustment based on the camera pose parameters in the image transformation parameter adjustment unit 141, the image transformation based on the image transformation parameters in the image transformation unit 151, the difference image calculation based on the transformed image in the image difference calculation unit 161, the object detection based on, for example, the difference image in the obstacle detection unit 171, and the application processing based on the detected object in the control application processing unit 181 may be embodied using known methods (refer to, for example, PTL 2 and others); therefore, the detailed description thereof will not be given here.

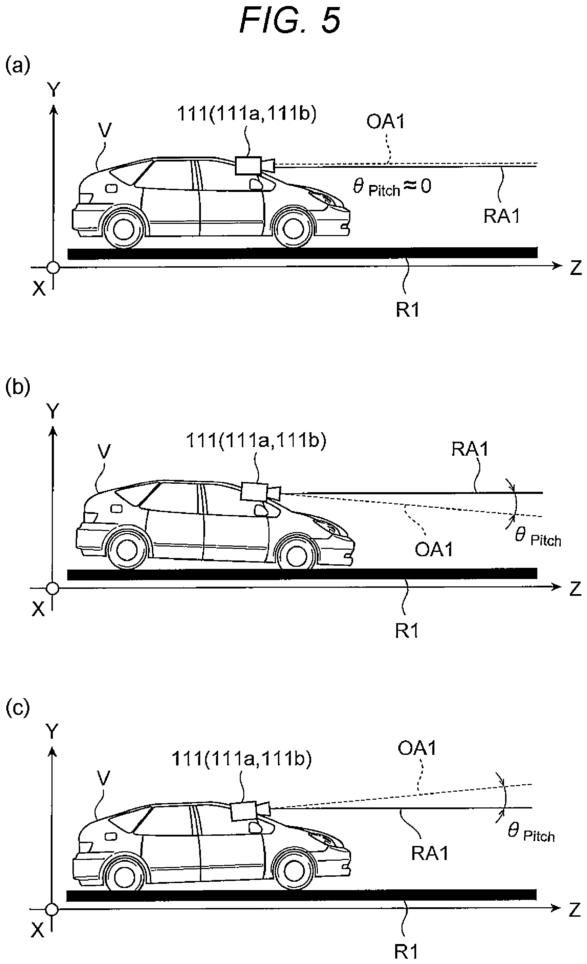

With reference to FIGS. 5a to 5c, next, a description will be given of a change in camera pose in a case where the external environment recognition device 100 is applied as a system for monitoring the surroundings of the user's vehicle V. The following description concerns only a camera pose parameter called a pitch angle (θ_{Pitch}); however, other camera pose parameters such as a yaw angle (θ_{Yaw}) and a roll angle (θ_{Roll}) can be taken into consideration without a change in nature of processes to be described below as a matter of course.

FIG. 5a illustrates a state in which the user's vehicle V equipped with the sensing unit 111 crosses an ideal flat road (the road having the flat ground R1). In this state, the pitch angle (θ_{Pitch}) relative to the sensor optical axis OA1 is set at an orientation of zero degrees relative to the flat ground R1 drawn with a reference axis RA1. The reference axis RA1 is the same as the sensor optical axis OA1, and therefore is superposed on the sensor optical axis OA1. It can be considered that the illustrated configuration and relationship are default as to the sensor optical axis OA1 and the reference axis RA1 of the flat road.

FIG. 5b illustrates a state in which the user's vehicle V equipped with the sensing unit 111 is braked when crossing the ideal flat road (the road having the flat ground R1). As a result, the user's vehicle V tilts as the weight of the user's vehicle V shifts forward, so that the rear end of the user's vehicle V is lifted. This affects the orientation of the sensing unit 111 and the orientation of the sensor optical axis OA1 to cause a difference between the sensor optical axis OA1 and the reference axis RA1 of the flat ground. This difference is drawn as a difference (θ_{Pitch}) in pitch angle.

FIG. 5c illustrates a state in which the user's vehicle V equipped with the sensing unit 111 is accelerated when crossing the ideal flat road (the road having the flat ground R1). As a result, the user's vehicle V tilts as the weight of the user's vehicle V shifts rearward, so that the front end of the user's vehicle V is lifted. This affects the orientation of the sensing unit 111 and the orientation of the sensor optical axis OA1 to cause a difference between the sensor optical axis OA1 and the reference axis RAl of the flat ground. This difference is drawn as a difference (θ_{Pitch}) in pitch angle.

The states illustrated in FIGS. 5b and 5c may occur in a case where a road has a step difference or irregularities on its road surface and under an environmental condition that the user's vehicle V is running at a certain velocity due to an inclination of a road.

The information described above can be acquired from the road surface shape information acquisition unit 134 or the vehicle information acquisition unit 135 of the sensor information acquisition unit 132. The camera pose parameter calculation unit 131 calculates at least one of the camera pose parameters, based on the information.

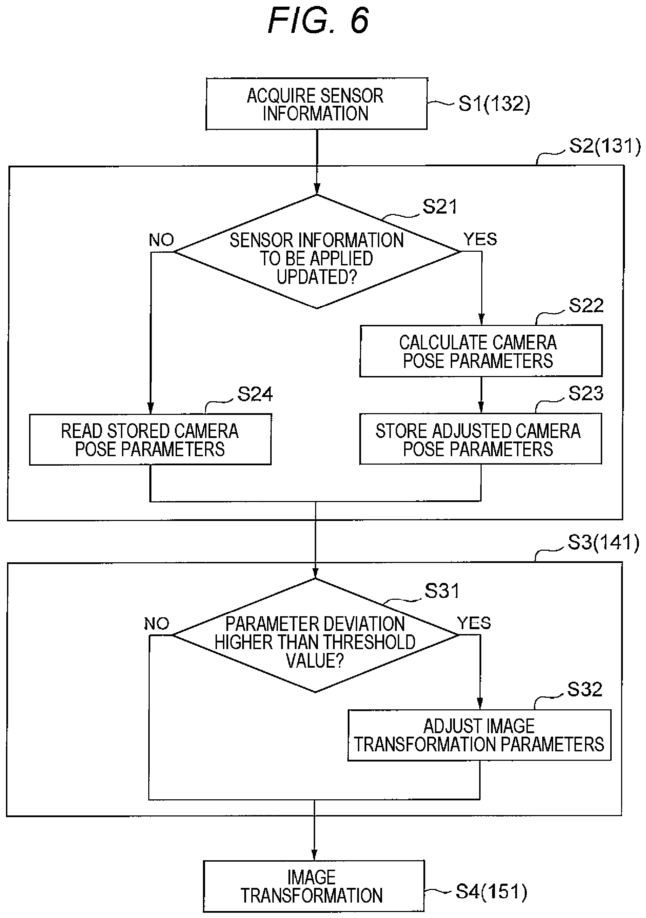

FIG. 6 is a flowchart that illustrates a relationship among and processes by the units in the external environment recognition device 100, specifically, the camera pose parameter calculation unit 131, the sensor information acquisition unit 132, the image transformation parameter adjustment unit 141, and the image transformation unit 151, in adjusting the image transformation parameters and performing the geometric image transformation.

In sensor information acquisition step S1, first, the sensor information acquisition unit 132 attempts to retrieve information to be used for calculating camera pose parameters, from the respective sensors. This information can be collected from the camera sensors 111a and 111b of the sensing unit 111, a vehicle suspension system, in-vehicle sensors (sensors for detecting a vehicle speed, a cornering speed, a yaw rate, and the like), inertia measurement sensors, and other appropriate sensors. The information thus collected may be marked "changed/updated" or "no change", based on a retrieval operation from a previous processing cycle. The information thus marked may be used for further processing.

Next, the camera pose parameter calculation unit 131 carries out step S2. In step S21, the camera pose parameter calculation unit 131 receives the information collected in step S1, and determines whether the information to be applied is updated from the last processing cycle. When the information to be applied is successfully updated from the last processing cycle (Yes in S21), in step S22, the camera pose parameter calculation unit 131 calculates one of or all the camera pose parameters defined by the camera pitch angle (the horizontal turn), the camera roll angle (the longitudinal turn), and the camera yaw angle (the vertical turn), based on the information acquired in processing step S1. In a case where the temporary (temporal) nature of the data acquired by the sensing unit 111 is taken into consideration if applicable, the camera pose parameter calculation unit 131 may calculate a movement of and a difference in the user's vehicle V between the last processing cycle and the current processing cycle in consideration of the user's vehicle speed and cornering speed information, and may use the user's vehicle speed and cornering speed information in accordance with the calculated movement and difference in order to adjust the positions of the sensors in a three-dimensional space.

In a case where the information collected in processing step S1 contains the nature of road shape data (see the road surface shape information acquisition unit 134), the camera pose parameters are calculated based on an inclination of the road. Alternatively, in a case where the pitch angle, the yaw angle, and the roll angle are directly acquired in processing step S1 (see the vehicle information acquisition unit 135), the camera pose parameters are adjustable based on the offsets from the original parameters. Another method of calculating the camera pose parameters may alternatively be performed. In step S23, next, the camera pose parameter calculation unit 131 adjusts the camera pose parameters, and stores the camera pose parameters in, for example, the camera memory or the RAM for further processing and for use in the subsequent processing cycle.

When the information collected in processing step S1 has the status "no change" (No in S21), in processing step S24, the camera pose parameter calculation unit 131 reads the stored camera pose parameters for further processing.

Next, the image transformation parameter adjustment unit 141 carries out step S3. In step S31, the image transformation parameter adjustment unit 141 compares the camera pose parameters obtained in step S2 with the parameters in the last processing cycle. When a variation between the camera pose parameters in the current cycle and the camera pose parameters in the previous cycle (a parameter deviation) is higher than a predefined threshold value (Yes in S31), in step S32, the image transformation parameter adjustment unit 141 adjusts image transformation parameters that are preset camera external parameters for specifying the orientation of the sensor optical axis OA1 relative to the reference axis RA1 of the ground. In a case where the temporary (temporal) nature of the data acquired by the sensing unit 111 is taken into consideration if applicable, the image transformation parameter adjustment unit 141 may calculate a movement of and a difference in the user's vehicle V between the last processing cycle and the current processing cycle in consideration of the user's vehicle speed and cornering speed information, and may use the user's vehicle speed and cornering speed information in accordance with the calculated movement and difference in order to adjust the positions of the sensors in a three-dimensional space.

When the variation between the camera pose parameters in the current cycle and the camera pose parameters in the previous cycle is not higher than the predefined threshold value (No in S31), the image transformation parameter adjustment unit 141 does not execute further processing in step S3.

Finally, the image transformation unit 151 carries out step S4 to perform predefined geometric image transformation on the image (the monocular-vision region image) acquired and processed by the image acquisition unit 121. Examples of the image transformation in step S4 may include affine transformation, such as rotation, reduction, shearing, and top view image transformation, with respect to the flat ground. The transformation should be made pixel by pixel. In other words, the current characteristics of each pixel are transformed into a new state by calculating the geometric transformation of the corresponding pixel to generate a new image to be stored for further processing.

The difference in pitch angle (θ_{Pitch}) between the sensor optical axis OA1 and the reference axis RAl of the flat ground R1 illustrated in FIGS. 5b and 5c is adjusted in real time in such a manner that the foregoing processing is executed based on FIG. 6. This achieves maintenance of an accurate relationship between the sensor optical axis OA1 and the reference axis RA1, which may directly affect a result of geometric image transformation.

The foregoing description concerns the configuration and operation of the external environment recognition device 100 according to the first embodiment. With the external environment recognition device 100 according to the first embodiment, it is hence possible to calculate camera pose parameters and adjust geometric image transformation parameters, thereby adjusting a relationship between a current environment and one or more camera devices, even in a change in environmental condition when the vehicle is running. It is also possible to reduce an erroneous detection ratio and improve object detection accuracy, thereby increasing object detection reliability. It is also possible to calculate a distance from the vehicle to the detected object with high accuracy. It is thus possible to improve the safety of driving.

Also in the external environment recognition device 100 according to the first embodiment, as described above, an obstacle is detected in such a manner that road surface shape information on the outside (the surroundings of the user's vehicle V) is acquired using images (stereo-vision images) captured by the two camera sensors 111a and 111b of the sensing unit 111, and a geometrically transformed image is created from one of the images (the monocular-vision images) captured by the camera sensors 111a and 111b of the sensing unit 111. This configuration therefore enables efficient use of both the stereo-vision region and the monocular-vision regions brought by the two camera sensors 111a and 111b of the sensing unit 111.

### [Second Embodiment]

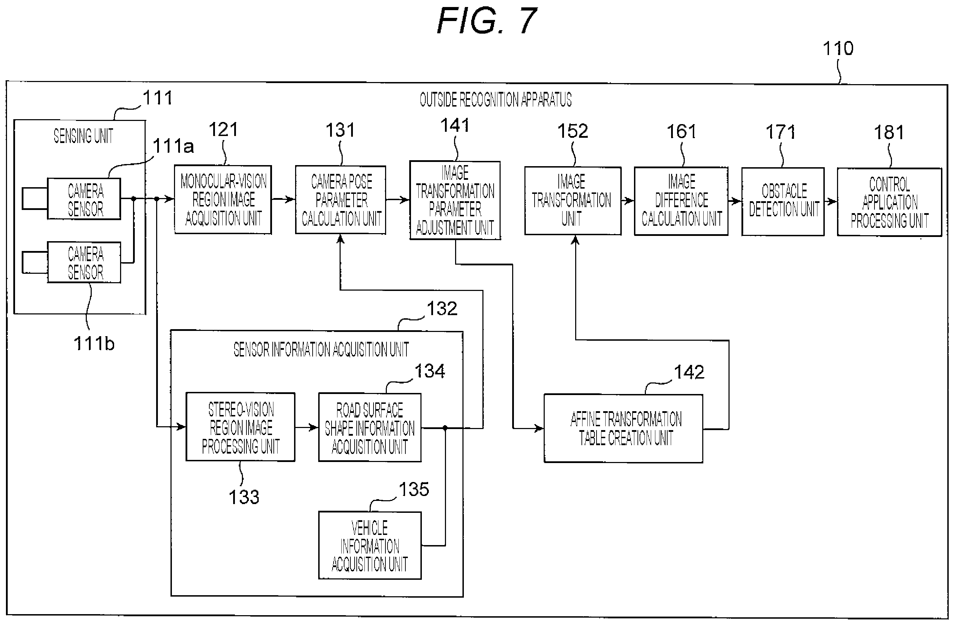

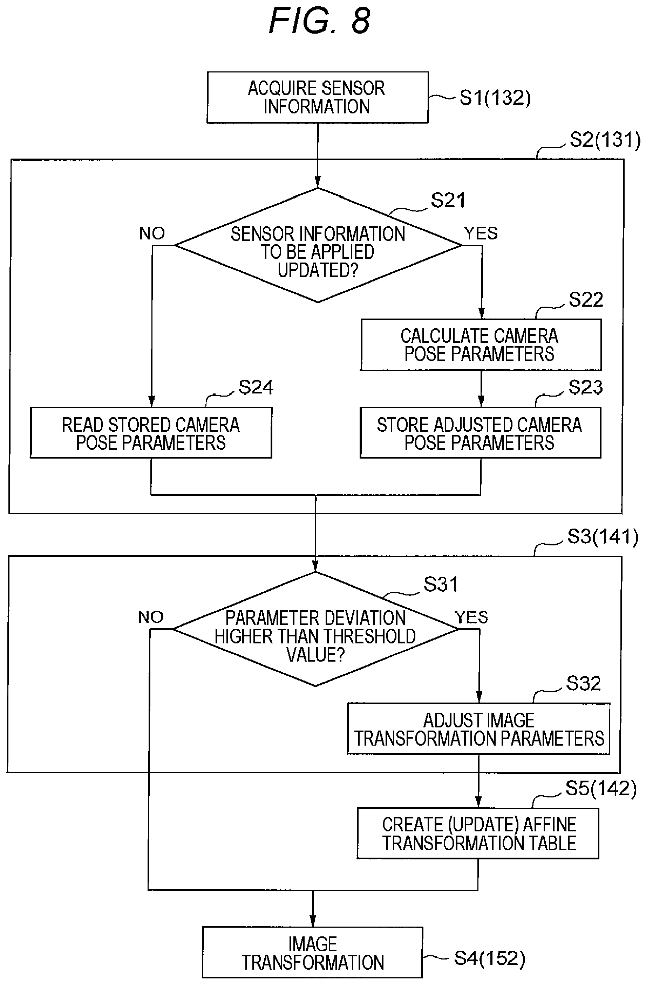

With reference to FIGS. 7 and 8, next, a description will be given of an external environment recognition device 110 according to a second embodiment. A basic configuration of the external environment recognition device 110 according to the second embodiment is different from the configuration of the external environment recognition device 100 according to the first embodiment in the following two points. It should be noted that components of the external environment recognition device 110 according to the second embodiment, which are the same as the components of the external environment recognition device 100 according to the first embodiment, are denoted with the same reference signs as those for the components of the external environment recognition device 100 according to the first embodiment; therefore, the detailed description thereof will not be given here.

FIG. 7 is a block diagram that illustrates a schematic configuration of the external environment recognition device 110 according to the second embodiment.

In the second embodiment, first, an image transformation unit 152 performs geometric image transformation (bird's-eye view image transformation in the second embodiment), using an affine transformation table (also referred to as a look-up table) calculated and created by an affine transformation table creation unit 142 (to be described later) in advance such that a processing time of the image transformation unit 152 is reduced.

Second, the affine transformation table creation unit 142 is added. The affine transformation table creation unit 142 creates the affine transformation table, based on image transformation parameters adjusted by an image transformation parameter adjustment unit 141. This processing is not executed when a variation between camera pose parameters in a current cycle and camera pose parameters in a previous cycle is not higher than a predefined threshold value.

FIG. 8 is a flowchart that illustrates a relationship among and processes by the units in the external environment recognition device 110, specifically, a camera pose parameter calculation unit 131, a sensor information acquisition unit 132, the image transformation parameter adjustment unit 141, the affine transformation table creation unit 142, and the image transformation unit 152, in adjusting image transformation parameters and performing geometric image transformation. Steps S1 to S3 in FIG. 8 are equal to those described in the first embodiment with reference to FIG. 6.

In the second embodiment, when the variation between the camera pose parameters in the current cycle and the camera pose parameters in the previous cycle, that is, the parameter deviation is higher than the predefined threshold value (Yes in S31), in step S32, the image transformation parameter adjustment unit 141 adjusts image transformation parameters that are preset camera external parameters for specifying an orientation of a sensor optical axis OA1 relative to the reference axis RA1 of the ground. In step S5, the affine transformation table creation unit 142 creates (updates) the affine transformation table that is calculated, created, and stored in advance, based on the image transformation parameters adjusted in step S32.

The image transformation unit 152 carries out step S4 to perform predefined geometric image transformation on an image (a monocular-vision region image) acquired and processed by an image acquisition unit 121, using the affine transformation table created in step S5.

With the external environment recognition device 110 according to the second embodiment, as in the external environment recognition device 100 according to the first embodiment, it is possible to calculate camera pose parameters and adjust geometric image transformation parameters, thereby adjusting a relationship between a current environment and one or more camera devices, even in a change in environmental condition when the vehicle is running. It is also possible to reduce an erroneous detection ratio and improve object detection accuracy, thereby increasing object detection reliability. It is also possible to calculate a distance from the vehicle to a detected object with high accuracy. It is thus possible to improve the safety of driving.

Also in the external environment recognition device 110 according to the second embodiment, the affine transformation table creation unit 142 creates (updates) the affine transformation table that defines the image transformation parameters, every processing cycle, for example, and the image transformation unit 152 performs the geometric image transformation using the affine transformation table. This configuration therefore enables reduction in processing time of the image transformation unit 152, and achieves high-speed processing by the image transformation unit 152.

The foregoing description concerns preferred embodiments of the present invention which the inventors have conceived at present. However, the embodiments of the present invention may be modified in various manners. The scope of the present invention is defined by the appended claims rather than the foregoing description, and all changes that fall within metes and bounds of the claims, or equivalence such metes and bounds thereof are therefore intended to be embraced by the claims.

The present invention is not limited to the foregoing embodiments, and involves various modifications within the scope of the amended claims. For example, the foregoing embodiments have been described in detail for easy understanding of the present invention, and are not necessarily limited to those having all the described configurations.

The foregoing configurations, functions, processing units, processing means, and the like may be embodied with hardware in such a manner that they are partially or entirely designed with, for example, integrated circuits. The foregoing configurations, functions, and the like may alternatively be embodied with software in such a manner that a processor interprets and executes programs implementing the respective functions. Information including programs, tables, files, and the like implementing the respective functions may be recorded on a storage device such as a memory, a hard disk, or a solid state drive (SSD) or a recording medium such as an IC card, an SD card, or a DVD.

The control lines and information lines described herein are those required for explanation; therefore, all the control lines and information lines for a product are not necessarily described. In practice, it can be considered that almost all the configurations are interconnected.

### Reference Signs List

100 external environment recognition device (first embodiment)
110 external environment recognition device (second embodiment)
111 sensing unit
111a, 111b camera sensor
121 monocular-vision region image acquisition unit (image acquisition unit)
131 camera pose parameter calculation unit
132 sensor information acquisition unit
133 stereo-vision region image processing unit
134 road surface shape information acquisition unit
135 vehicle information acquisition unit
141 image transformation parameter adjustment unit
142 affine transformation table creation unit (second embodiment)
151 image transformation unit
152 image transformation unit (second embodiment)
161 image difference calculation unit
171 obstacle detection unit
181 control application processing unit
OA1 sensor optical axis
RA1 reference axis of flat ground
V vehicle (user's vehicle)

## Claims

1. An external environment recognition device (100) for detecting an obstacle from an image of an environment around a user's vehicle (V), comprising:
an image acquisition unit (121) configured to acquire the image of the outside captured by a camera sensor (111a), wherein
the outside corresponds to a region forward of the user's vehicle (V);
a sensor information acquisition unit (132) configured to acquire sensor information collected from a sensor that detects information on a current pose of the camera sensor (111a), wherein
the sensor information acquisition unit (132) includes a road surface shape information acquisition unit (134) configured to acquire road surface shape information of the outside;
a camera pose parameter calculation unit (131) configured to calculate at least one of camera pose parameters defined by a camera pitch angle, a camera roll angle, and a camera yaw angle to correct a misalignment of a sensor optical axis (OA1) of the camera sensor (111a) relative to a predetermined reference, using the road surface shape information received from the road surface shape information acquisition unit (134), wherein
the predetermined reference is a road having a flat ground (R1);
an image transformation parameter adjustment unit (141) configured to adjust image transformation parameters for performing a geometric image transformation on the image acquired by the image acquisition unit (121), using the camera pose parameters calculated by the camera pose parameter calculation unit (131), wherein
the image transformation parameter adjustment unit (141) is configured to compare the camera pose parameters of a current processing cycle with camera pose parameters obtained in a previous processing cycle, and when a parameter variation between the camera pose parameters of the current processing cycle and the camera pose parameters of the previous processing cycle is higher than a predefined threshold value, the image transformation parameter adjustment unit (141) is configured to adjust the image transformation parameters that are preset camera external parameters for specifying an orientation of the sensor optical axis (OA1) relative to a reference axis (RA1) of the flat ground (R1); and
an image transformation unit (151) configured to perform geometric image transformation on the image acquired by the image acquisition unit (121), based on image transformation parameters calculated by the image transformation parameter adjustment unit (141) by applying an affine transformation with respect to the flat ground (R1).

2. The external environment recognition device (100) according to claim 1, wherein
the road surface shape information acquisition unit (134) acquires the road surface shape information from the image captured by the camera sensor (111a).

3. The external environment recognition device (100) according to claim 2, wherein
the road surface shape information acquisition unit (134) acquires the road surface shape information from images captured by a plurality of camera sensors (111a, 111b) including at least the camera sensor (111a).

4. The external environment recognition device (100) according to claim 1, further comprising:
an image difference calculation unit (161) configured to calculate a difference between at least two images subjected to image transformation in the image transformation unit (151); and
an obstacle detection unit (171) configured to detect, using the image acquired by the image acquisition unit (121) and the difference calculated by the image difference calculation unit (161), the obstacle in the image.

5. The external environment recognition device (100) according to claim 1, wherein
the sensor information acquisition unit (132) acquires sensor information on a movement of the camera sensor (111a), and
the camera pose parameter calculation unit (131) calculates camera pose parameters including a translation parameter and a turn parameter that define the movement of the camera sensor (111a) in a predetermined time.

## Patentansprüche

1. Außenumgebungserkennungsvorrichtung (100) zum Erkennen eines Hindernisses aus einem Bild einer Umgebung um ein Fahrzeug (V) eines Benutzers, umfassend:
eine Bilderfassungseinheit (121), die konfiguriert ist, um das von einem Kamerasensor (111a) aufgenommene Bild der Außenseite zu erfassen, wobei
die Außenseite einem Bereich vor dem Fahrzeug (V) des Benutzers entspricht;
eine Sensorinformationserfassungseinheit (132), die konfiguriert ist, um Sensorinformationen zu erfassen, die von einem Sensor gesammelt werden, der Informationen über eine aktuelle Stellung des Kamerasensors (111a) erkennt, wobei
die Sensorinformationserfassungseinheit (132) eine
Straßenoberflächenforminformationserfassungseinheit (134) beinhaltet, die konfiguriert ist, um Straßenoberflächenforminformationen der Außenseite zu erfassen;
eine Kamerastellungsparameterberechnungseinheit (131), die konfiguriert ist, um mindestens einen von Kamerastellungsparametern zu berechnen, die durch einen Kameraneigungswinkel, einen Kamerarollwinkel und einen Kameragierwinkel definiert sind, um eine Fehlausrichtung einer optischen Sensorachse (OA1) des Kamerasensors (111a) relativ zu einer vorbestimmten Referenz zu korrigieren, unter Verwendung der von der Straßenoberflächenforminformationserfassungseinheit (134) empfangenen Straßenoberflächenforminformationen, wobei
die vorbestimmte Referenz eine Straße mit einem flachen Boden (R1) ist;
eine Bildtransformationsparameteranpassungseinheit (141), die konfiguriert ist, um Bildtransformationsparameter zum Durchführen einer geometrischen Bildtransformation an dem von der Bilderfassungseinheit (121) erfassten Bild unter Verwendung der von der Kamerastellungsparameterberechnungseinheit (131) berechneten Kamerastellungsparameter anzupassen, wobei
die Bildtransformationsparameteranpassungseinheit (141) konfiguriert ist, um die Kamerastellungsparameter eines aktuellen Verarbeitungszyklus mit in einem vorherigen Verarbeitungszyklus erhaltenen Kamerastellungsparametern zu vergleichen, und wenn eine Parametervariation zwischen den Kamerastellungsparametern des aktuellen Verarbeitungszyklus und den Kamerastellungsparametern des vorherigen Verarbeitungszyklus höher als ein vordefinierter Schwellenwert ist, die Bildtransformationsparameteranpassungseinheit (141) konfiguriert ist, um die Bildtransformationsparameter anzupassen, die voreingestellte Kameraaußenparameter zum Spezifizieren einer Ausrichtung der optischen Sensorachse (OA1) relativ zu einer Referenzachse (RA1) des flachen Bodens (R1) sind; und
eine Bildtransformationseinheit (151), die konfiguriert ist, um eine geometrische Bildtransformation an dem von der Bilderfassungseinheit (121) erfassten Bild basierend auf von der Bildtransformationsparameteranpassungseinheit (141) berechneten Bildtransformationsparametern durch Anwenden einer affinen Transformation in Bezug auf den flachen Boden (R1) durchzuführen.

2. Außenumgebungserkennungsvorrichtung (100) nach Anspruch 1, wobei
die Straßenoberflächenforminformationserfassungseinheit (134) die Straßenoberflächenforminformationen aus dem von dem Kamerasensor (111a) aufgenommenen Bild erfasst.

3. Außenumgebungserkennungsvorrichtung (100) nach Anspruch 2, wobei
die Straßenoberflächenforminformationserfassungseinheit (134) die Straßenoberflächenforminformationen aus Bildern erfasst, die von einer Vielzahl von Kamerasensoren (111a, 111b) einschließlich mindestens des Kamerasensors (111a) aufgenommen werden.

4. Außenumgebungserkennungsvorrichtung (100) nach Anspruch 1, ferner umfassend:
eine Bilddifferenzberechnungseinheit (161), die konfiguriert ist, um eine Differenz zwischen mindestens zwei Bildern zu berechnen, die einer Bildtransformation in der Bildtransformationseinheit (151) unterzogen werden; und
eine Hinderniserkennungseinheit (171), die konfiguriert ist, um unter Verwendung des von der Bilderfassungseinheit (121) erfassten Bildes und der von der Bilddifferenzberechnungseinheit (161) berechneten Differenz das Hindernis in dem Bild zu erkennen.

5. Außenumgebungserkennungsvorrichtung (100) nach Anspruch 1, wobei
die Sensorinformationserfassungseinheit (132) Sensorinformationen über eine Bewegung des Kamerasensors (111a) erfasst, und
die Kamerastellungsparameterberechnungseinheit (131) Kamerastellungsparameter einschließlich eines Translationsparameters und eines Wendeparameters berechnet, die die Bewegung des Kamerasensors (111a) in einer vorbestimmten Zeit definieren.

## Revendications

1. Dispositif de reconnaissance d'environnement externe (100) pour détecter un obstacle à partir d'une image d'un environnement autour d'un véhicule d'utilisateur (V), comprenant :
une unité d'acquisition d'image (121) configurée pour acquérir l'image de l'extérieur capturée par un capteur de caméra (111a), dans lequel
l'extérieur correspond à une région à l'avant du véhicule d'utilisateur (V) ;
une unité d'acquisition d'informations de capteur (132) configurée pour acquérir des informations de capteur collectées à partir d'un capteur qui détecte des informations sur une pose actuelle du capteur de caméra (111a), dans lequel
l'unité d'acquisition d'informations de capteur (132) inclut une unité d'acquisition d'informations de forme de surface de route (134) configurée pour acquérir des informations de forme de surface de route de l'extérieur ;
une unité de calcul de paramètre de pose de caméra (131) configurée pour calculer au moins l'un de paramètres de pose de caméra définis par un angle de tangage de caméra, un angle de roulis de caméra, et un angle de lacet de caméra pour corriger un désalignement d'un axe optique de capteur (OA1) du capteur de caméra (111a) par rapport à une référence prédéterminée, en utilisant les informations de forme de surface de route reçues à partir de l'unité d'acquisition d'informations de forme de surface de route (134), dans lequel
la référence prédéterminée est une route ayant un sol plat (R1) ;
une unité d'ajustement de paramètre de transformation d'image (141) configurée pour ajuster des paramètres de transformation d'image pour effectuer une transformation d'image géométrique sur l'image acquise par l'unité d'acquisition d'image (121), en utilisant les paramètres de pose de caméra calculés par l'unité de calcul de paramètre de pose de caméra (131), dans lequel
l'unité d'ajustement de paramètre de transformation d'image (141) est configurée pour comparer les paramètres de pose de caméra d'un cycle de traitement actuel avec des paramètres de pose de caméra obtenus dans un cycle de traitement précédent, et lorsqu'une variation de paramètre entre les paramètres de pose de caméra du cycle de traitement actuel et les paramètres de pose de caméra du cycle de traitement précédent est supérieure à une valeur de seuil prédéfinie, l'unité d'ajustement de paramètre de transformation d'image (141) est configurée pour ajuster les paramètres de transformation d'image qui sont des paramètres externes de caméra prédéfinis pour spécifier une orientation de l'axe optique de capteur (OA1) par rapport à un axe de référence (RA1) du sol plat (R1) ; et
une unité de transformation d'image (151) configurée pour effectuer une transformation d'image géométrique sur l'image acquise par l'unité d'acquisition d'image (121), sur la base de paramètres de transformation d'image calculés par l'unité d'ajustement de paramètre de transformation d'image (141) en appliquant une transformation affine par rapport au sol plat (R1).

2. Dispositif de reconnaissance d'environnement externe (100) selon la revendication 1, dans lequel
l'unité d'acquisition d'informations de forme de surface de route (134) acquiert les informations de forme de surface de route à partir de l'image capturée par le capteur de caméra (111a).

3. Dispositif de reconnaissance d'environnement externe (100) selon la revendication 2, dans lequel
l'unité d'acquisition d'informations de forme de surface de route (134) acquiert les informations de forme de surface de route à partir d'images capturées par une pluralité de capteurs de caméra (111a, 111b) incluant au moins le capteur de caméra (111a).

4. Dispositif de reconnaissance d'environnement externe (100) selon la revendication 1, comprenant en outre :
une unité de calcul de différence d'image (161) configurée pour calculer une différence entre au moins deux images soumises à une transformation d'image dans l'unité de transformation d'image (151) ; et
une unité de détection d'obstacle (171) configurée pour détecter, en utilisant l'image acquise par l'unité d'acquisition d'image (121) et la différence calculée par l'unité de calcul de différence d'image (161), l'obstacle dans l'image.

5. Dispositif de reconnaissance d'environnement externe (100) selon la revendication 1, dans lequel
l'unité d'acquisition d'informations de capteur (132) acquiert des informations de capteur sur un mouvement du capteur de caméra (111a), et
l'unité de calcul de paramètre de pose de caméra (131) calcule des paramètres de pose de caméra incluant un paramètre de translation et un paramètre de virage qui définissent le mouvement du capteur de caméra (111a) dans un temps prédéterminé.
